# FASCICULE DE BREVET EUROPEEN

(11) **EP 2 437 037 B1**
(45) Date de publication et mention de la délivrance du brevet: **14.03.2018**
(21) Numéro de dépôt: 11182047.8
(22) Date de dépôt: 20.09.2011
(51) Int. Cl.: G01G 19/00, G01B 11/02

(54) **Procédé et dispositif de détermination des trois dimensions d'un colis**
Verfahren und Vorrichtung zur Bestimmung der Abmessungen eines Pakets
Method and device for determining the three dimensions of a parcel

(30) Priorité: 30.09.2010 EP 10306062
(43) Date de publication de la demande: 04.04.2012
(73) Titulaire: NEOPOST TECHNOLOGIES, 92220 Bagneux (FR)
(72) Inventeur: Farlotti, Laurent, 49080 Pruniers (FR); Rico, Ruben, 75014 Paris (FR)
(74) Mandataire: David, Alain

(56) Documents cités:
- JP-A- 2005 227 260
- US-A- 5 331 118
- US-A- 5 528 517
- US-A- 5 841 541
- US-A- 5 956 525
- US-A1- 2005 155 419
- US-B1- 6 614 928

## Description

### Domaine de la technique

La présente invention se rapporte au domaine du traitement de courrier et elle vise en particulier un procédé et un dispositif de détermination automatique des trois dimensions d'un colis destiné ensuite à être affranchi dans un système d'affranchissement ou injecté dans un système de transport logistique.

### Art antérieur

Il est bien connu que la détermination du montant d'affranchissement d'un article de courrier dépend de plusieurs paramètres comme notamment l'adresse du destinataire, la classe de courrier, le service demandé, le poids ou les dimensions de cet article de courrier. L'adresse, la classe et le service peuvent être saisis au clavier du système d'affranchissement et le poids être obtenu avec une balance automatique interne ou externe au système d'affranchissement. Par contre, la détermination automatique des dimensions de l'article de courrier est plus délicate, notamment lorsqu'il s'agit de colis, et doit le plus souvent faire appel, à des systèmes à ultrasons ou à diodes électroluminescentes par exemple.

Or, de tels systèmes qui sont relativement onéreux ne se justifient que pour des volumes d'affranchissement élevés et ne sont guère envisageables dans des systèmes d'affranchissement de bas de gamme (low cost) destinés à réaliser de un à quelques dizaines d'affranchissement de colis par jour. Une limitation de ces systèmes est en outre qu'ils ne prennent en compte, malgré leur coût, que les dimensions de trois bords du colis. Or, lorsque celui-ci n'est pas parallélépipédique, cela peut entraîner des erreurs dans la détermination de ces dimensions. US 2005/155419 A1, US 5 841 541 A, US 5 528 517 A, US 6 614 928 B1, JP 2005 227260 A, US 5 331 118 A et US 5 956 525 A décrivent des dispositifs de détermination de dimensions.

### Objet et définition de l'invention

La présente invention vise ainsi à remédier aux inconvénients précités et à permettre la détermination à très faible coût des trois dimensions d'un colis. Un but de l'invention est de permettre cette détermination de façon particulièrement simple mais néanmoins automatique.

Ces buts sont atteints conformément à l'invention avec un dispositif de détermination des trois dimensions d'un colis selon la revendication indépendante de dispositif 4. La présence de cette grille ayant un pas prédéfini permet de déterminer les dimensions en mm du colis une fois ses arêtes obtenues simplement en comptant le nombre de pas entourant ledit colis.

De préférence, ladite surface support peut être formée par un panneau de sol horizontal comportant une grille ou par un panneau de sol horizontal uni sans grille.

Avantageusement, ledit capteur d'images est une Webcam munie d'un objectif grand angle et d'un autofocus.

L'invention concerne également le procédé associé de détermination des trois dimensions d'un colis selon la revendication indépendante de procédé 1. Les modes particuliers de réalisation de l'invention sont définis dans les revendications dépendantes. De préférence, lorsque que les nombres de pas de ladite grille relatifs à deux arêtes parallèles sont différents, il est pris en compte l'une des valeurs suivantes : la valeur minimale, la valeur maximale, la moyenne ou toute autre valeur déterminée à partir desdits nombres de pas.

Avantageusement, ladite grille formant chacun desdits panneaux de coté peut être formée par des repères séparés les uns des autres par une distance égale et prédéterminée ou bien encore par un maillage segmentant l'espace en éléments de forme et de taille identiques et prédéterminées.

### Brève description des dessins

D'autres caractéristiques et avantages de l'invention ressortiront de la description suivante de modes de réalisation particuliers, donnés à titre d'exemples, en référence aux dessins annexés, sur lesquels :
- la figure 1 est une vue schématique illustrant un exemple de réalisation d'un dispositif de mesure des trois dimensions d'un colis selon l'invention ; et
- la figure 2 illustre les étapes successives permettant la détermination des trois dimensions d'un colis avec le dispositif de mesure de la figure 1.

### Description détaillée de modes de réalisation préférentiels

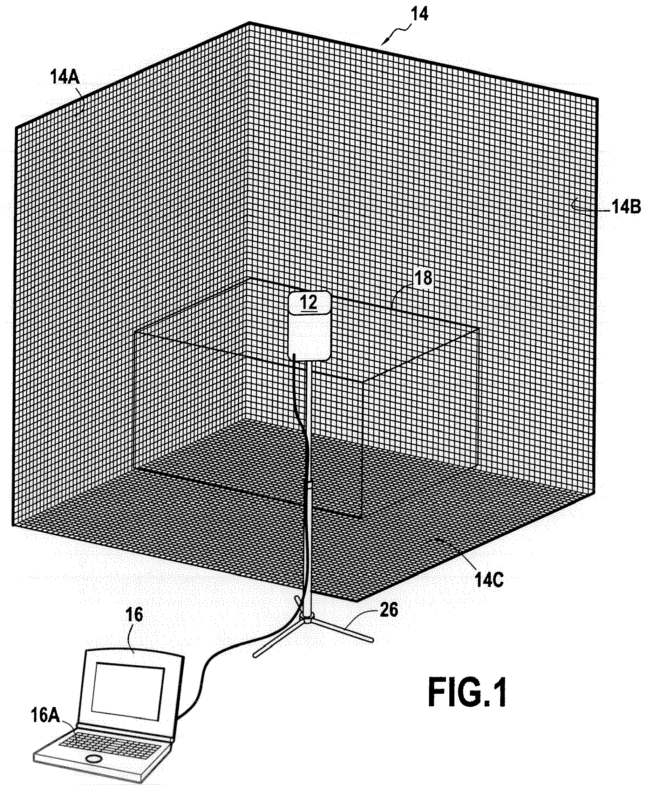

La figure 1 illustre le dispositif selon l'invention permettant à très faible coût, grâce à des moyens simples, de déterminer les trois dimensions (longueur, largeur et hauteur) d'un colis.

Ce dispositif 10 est constitué d'un capteur d'images 12, d'un support trièdre de référence 14 et d'une unité de traitement 16 reliée au capteur d'images pour déterminer les dimensions d'un colis 18 reposant sur ce support à partir de son image acquise par le capteur d'images.

Le support trièdre de référence au coin duquel sera adossé le colis à mesurer est formé de trois panneaux 14A, 14B, 14C, cartonnés ou en plastique et suffisamment rigides pour bien y caler ce colis, chaque panneau étant disposé perpendiculairement aux deux autres de façon à définir à leurs lignes de jonction communes les trois axes X, Y et Z d'un système orthonormé tridimensionnel de coordonnées. Les deux panneaux verticaux de coté 14A, 14B sont munis d'une grille, de préférence uniforme, ayant un pas prédéfini, le panneau horizontal de sol 14C formant la surface support pour le colis pouvant aussi comporter cette même grille ou de préférence simplement comporter un fond uni noir. La grille peut par exemple être formée par un maillage segmentant l'espace en une multiplicité d'éléments comme des tuiles de forme et taille identiques et prédéterminées (par exemple des carrés de dimensions déterminées 5mmx5mm) ou par des repères, croix ou étoiles par exemple, espacés les uns des autres selon ce pas prédéfini.

Le capteur d'images 12 est avantageusement monté sur un trépied 26, ou tout autre support similaire (colonne, table, etc...), de préférence extérieur au support trièdre de référence, surélevé ou non par rapport à lui, de façon à obtenir une image intégrant l'ensemble du support trièdre de référence. Toutefois, pour ne pas être trop éloigné du colis à mesurer, le capteur d'images (de type CCD ou CMOS, par exemple une webcam d'une résolution d'au moins deux millions de pixels) est de préférence muni d'une optique grand angle (90° environ) et d'un autofocus pour permettre l'acquisition d'une image nette quelles que soient les dimensions du colis, de 5 à 70 cm de coté si l'on considère par exemple un support trièdre de référence de 80x80x80cm.

L'unité de traitement 16 peut classiquement être constituée d'un ordinateur à usage général, de type ordinateur personnel ou portable, comportant des moyens matériels et logiciels 16A adaptés à l'acquisition et au traitement des images issues du capteur d'images 12 pour déterminer les trois dimensions du colis selon un procédé de mesure approprié.

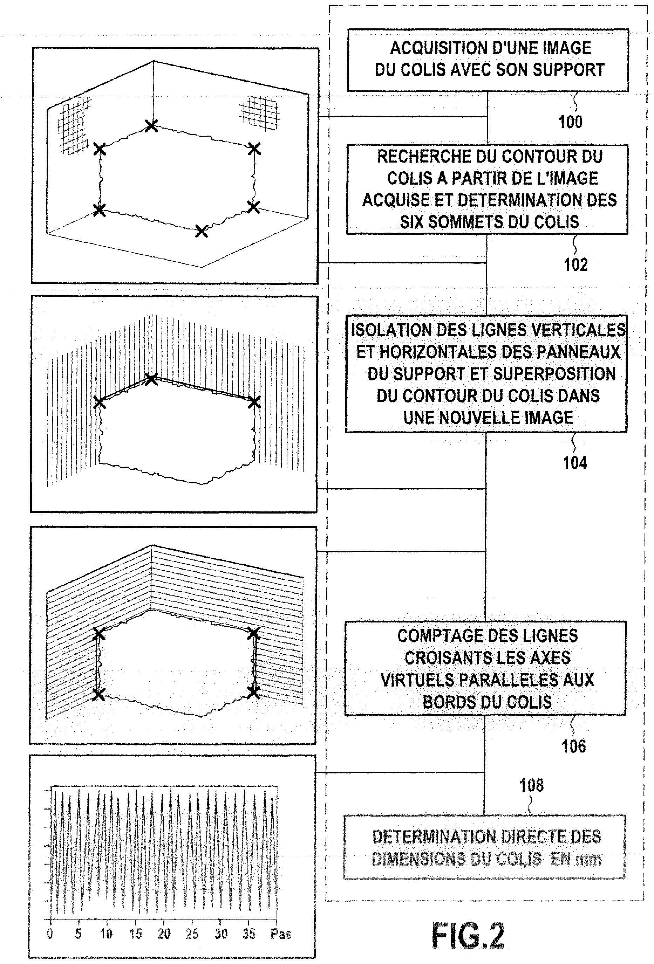

Le procédé de mesure des dimensions du colis selon l'invention est illustré en regard de la figure 2.

Ainsi, dans une première étape 100, une image du colis adossé au support trièdre de référence 14 et dont les trois dimensions sont à mesurer est acquise par le capteur d'images 12 puis, dans une étape 102 est transmise à l'unité de traitement 16 pour analyse. Cette analyse consiste, au moyen d'une recherche de contour connue (analyse de Blob ou transformée de Hough par exemple), à la détermination du contour du colis et, celui-ci étant assimilé à un hexagone, à celle de ses six sommets visibles (matérialisés par des croix sur la figure 2A). Ensuite, dans une étape 104, de façon connue, les lignes horizontales et verticales formant la grille des deux panneaux verticaux de cotés 14A, 14B sur lesquels le colis est accolé seront isolées et superposées successivement dans une nouvelle image avec le contour du colis déterminé précédemment. Deux axes virtuels horizontaux seront alors tirés parallèlement aux deux arrêtes reliant les sommets supérieurs du colis et, dans une étape 106, pour chacun de ces deux axes, le nombre de lignes verticales croisées (une ligne correspondant à un pas de la grille) sera déterminé. De même, au moins un axe virtuel vertical sera tiré parallèlement à une des deux arrêtes reliant les sommets droit et gauche du colis et, pour cet axe, le nombre de lignes horizontales croisées sera aussi déterminé. Du nombre de ces croissements, il en sera alors directement déduit en mm les trois dimensions du colis selon l'axe correspondant dans une étape ultime 108.

La précision de la mesure étant limitée par la distance existant entre deux lignes (le pas de la grille), il est possible toutefois de l'augmenter en procédant à une interpolation de la position du sommet de l'arête lorsque ce sommet se termine entre deux pas adjacents.

En outre, en systématisant cette étape de comptage pour chacune des six arêtes du colis, on peut vérifier que le colis est sensiblement parallélépipédique. En effet, dans le cas où la mesure des arrêtes parallèles diffère sensiblement, l'unité de traitement peut-être programmée pour prendre en compte la valeur minimale, la valeur maximale, la moyenne ou toute autre valeur déterminée à partir des valeurs mesurées, en fonction des spécifications exigées par le transporteur.

En cas de contraste faible, cette méthode facilite la détermination de la largeur ou la longueur du colis. On notera d'ailleurs que dans ce cas, le panneau horizontal 14C n'a pas besoin de comporter de grille et peut donc être uniformément noir, son quadrillage n'étant indispensable que si l'on souhaite réaliser le comptage systématique le long des six arêtes du colis, comme évoqué précédemment.

On aura noté que, si dans un souci de simplification, les figures font référence essentiellement à un quadrillage régulier, d'autres formes de maillage, comme des hexagones sont envisageables.

## Revendications

1. Procédé de détermination des trois dimensions d'un colis dans lequel le colis à mesurer est adossé à un support trièdre de référence (14) formé d'au moins deux panneaux de coté (14A, 14B) verticaux perpendiculaires entre eux et comportant chacun une grille ayant un pas prédéterminé et définissant avec une surface support (14C) pour ledit colis, un repère orthonormé de coordonnées tridimensionnel (O,X,Y,Z), tel qu'il comporte les étapes suivantes :
. acquisition par un capteur d'images (12) d'une image dudit colis disposé sur ledit support trièdre de référence,
. détermination par une unité de traitement (16) sur l'image ainsi acquise des arêtes dudit colis, et
. comptage par ladite unité de traitement d'un nombre de pas de ladite grille le long d'au moins trois arêtes perpendiculaires entre elles dudit colis formant une partie de contour dudit colis, pour obtenir chacune desdites trois dimensions en mm.

2. Procédé selon la revendication 1, tel que ladite étape de comptage consiste à compter un nombre de pas de ladite grille le long de chacune des six arêtes formant l'entier contour dudit colis.

3. Procédé selon la revendication 1, tel que lorsque que les nombres de pas de ladite grille relatifs à deux arêtes parallèles sont différents, il est pris en compte l'une des valeurs suivantes : la valeur minimale, la valeur maximale, la moyenne ou toute autre valeur déterminée à partir desdits nombres de pas.

4. Dispositif de détermination des trois dimensions d'un colis comportant :
. un support trièdre de référence (14) formé d'au moins deux panneaux de coté (14A, 14B) verticaux perpendiculaires entre eux et comportant chacun une grille ayant un pas prédéterminé et contre lesquels est adossé ledit colis et définissant avec une surface support (14C) pour ledit colis, un repère orthonormé de coordonnées tridimensionnel (O,X,Y,Z),
. un capteur d'images (12) pour acquérir une image dudit colis adossé contre ledit support trièdre de référence, et
. une unité de traitement (16) reliée audit capteur d'images pour déterminer les trois dimensions dudit colis à partir de ladite image ainsi acquise, tel que ladite unité de traitement est configurée pour déterminer des arêtes dudit colis, à partir de ladite image,
et pour déterminer en mm chacune desdites trois dimensions dudit colis en comptant un nombre de pas de ladite grille le long d'au moins trois arêtes perpendiculaires entre elles dudit colis formant une partie de contour dudit colis.

5. Dispositif selon la revendication 4, tel que ladite unité de traitement est configurée pour compter un nombre de pas de ladite grille le long de chacune des six arêtes formant l'entier contour dudit colis.

6. Dispositif selon la revendication 4, tel que ladite surface support est formée par un panneau de sol horizontal uni sans grille ou comportant une grille.

7. Dispositif selon la revendication 4, tel que ladite grille formant chacun desdits panneaux de coté est formée par des repères séparés les uns des autres par une distance égale et prédéterminée.

8. Dispositif selon la revendication 4, tel que ladite grille formant chacun desdits panneaux de coté est formée par un maillage segmentant l'espace en éléments de forme et de taille identiques et prédéterminées.

9. Dispositif selon la revendication 4, tel que ledit capteur d'images est une Webcam munie d'un objectif grand angle et d'un autofocus.

10. Système d'affranchissement d'articles de courrier comportant un dispositif de détermination des trois dimensions d'un colis selon l'une quelconque des revendications 4 à 9.

## Patentansprüche

1. Verfahren zur Bestimmung der drei Abmessungen eines Paketes, wobei das zu messende Paket an einen Bezugsachsenkreuzträger (14) angelehnt wird, der von wenigstens zwei vertikalen Seitenwänden (14A, 14B) gebildet ist, die senkrecht zueinander verlaufen und jeweils ein Gitter mit einer vorbestimmten Teilung aufweisen und die mit einer Tragfläche (14C) für das Paket ein orthonormiertes dreidimensionales Koordinatensystem (O,X,Y,Z) definieren, derart, dass es die folgenden Schritte umfasst:
- Aufnehmen eines Bildes des Paketes, das auf dem Bezugsachsenkreuzträger angeordnet ist, durch einen Bildsensor (12),
- Bestimmen der Kanten des Paketes in dem so aufgenommenen Bild durch eine Verarbeitungseinheit (16), und
- Zählen einer Anzahl an Teilungen des Gitters entlang von wenigstens drei senkrecht zueinander verlaufenden Kanten des Paketes, die einen Konturenteil des Paketes bilden, durch die Verarbeitungseinheit, um eine jede der drei Abmessungen in mm zu erhalten.

2. Verfahren nach Anspruch 1, welches derart ist, dass der Schritt des Zählens darin besteht, eine Anzahl an Teilungen des Gitters entlang einer jeden der sechs Kanten, welche die gesamte Kontur des Paketes bilden, zu zählen.

3. Verfahren nach Anspruch 1, welches derart ist, dass wenn die Relativzahlen von Teilungen des Gitters an zwei parallelen Kanten unterschiedlich sind, einer der folgenden Werte berücksichtigt wird: der Minimalwert, der Maximalwert, der Mittelwert oder jedweder andere anhand der Zahlen von Teilungen bestimmte Wert.

4. Vorrichtung zur Bestimmung der drei Abmessungen eines Paketes, umfassend:
- einen Bezugsachsenkreuzträger (14), der von wenigstens zwei vertikalen Seitenwänden (14A, 14B) gebildet ist, die senkrecht zueinander verlaufen und jeweils ein Gitter mit einer vorbestimmten Teilung aufweisen und an die das Paket angelehnt wird und die mit einer Tragfläche (14C) für das Paket ein orthonormiertes dreidimensionales Koordinatensystem (O,X,Y,Z) definieren,
- einen Bildsensor (12) zum Aufnehmen eines Bildes des Paketes, das an den Bezugsachsenkreuzträger angelehnt ist, und
- eine Verarbeitungseinheit (16), die mit dem Bildsensor verbunden ist, um die drei Abmessungen des Paketes anhand des so aufgenommenen Bildes zu bestimmen,
derart, dass die Verarbeitungseinheit dazu ausgestaltet ist, Kanten des Paketes anhand des Bildes zu bestimmen, und
eine jede der drei Abmessungen des Paketes durch Zählen einer Anzahl an Teilungen des Gitters entlang von wenigstens drei senkrecht zueinander verlaufenden Kanten des Paketes, die einen Konturenteil des Paketes bilden, in mm zu bestimmen.

5. Vorrichtung nach Anspruch 4, welche derart ist, dass die Verarbeitungseinheit dazu ausgestaltet ist, eine Anzahl an Teilungen des Gitters entlang einer jeden der sechs Kanten, welche die gesamte Kontur des Pakets bilden, zu zählen.

6. Vorrichtung nach Anspruch 4, welche derart ist, dass die Tragfläche durch eine glatte horizontale Bodenwand, die kein Gitter hat oder ein Gitter aufweist, gebildet ist.

7. Vorrichtung nach Anspruch 4, welche derart ist, dass das Gitter, das eine jede der Seitenwände bildet, durch Koordinatensysteme gebildet ist, die durch einen gleichen und vorbestimmten Abstand voneinander getrennt sind.

8. Vorrichtung nach Anspruch 4, welche derart ist, dass das Gitter, das eine jede der Seitenwände bildet, durch eine Maschenstruktur gebildet ist, die den Raum in Elemente mit identischer und vorbestimmter Form und mit identischer und vorbestimmter Größe gliedert.

9. Vorrichtung nach Anspruch 4, welche derart ist, dass der Bildsensor eine Webcam ist, die mit einem Weitwinkelobjektiv und mit einem Autofokus ausgestattet ist.

10. System zum Frankieren von Poststücken, umfassend eine Vorrichtung zur Bestimmung der drei Abmessungen eines Paketes nach einem der Ansprüche 4 bis 9.

## Claims

1. Method for determining the three dimensions of a parcel in which the parcel to be measured is leaned against a trihedral reference support (14) formed by at least two mutually perpendicular vertical side panels (14A, 14B), each having a grid having a predetermined pitch and defining with a support surface (14C) an orthonormal system of three-dimensional coordinates (O, X, Y, Z) for said parcel, wherein it comprises the following steps:
. acquisition by an image sensor (12) of an image of said parcel disposed on said trihedral reference support,
. determination by a processing unit (16) of the edges of said parcel on the acquired image, and
. count by said processing unit of a number of steps of said grid along at least three mutually perpendicular edges of said parcel forming a contour portion of said parcel, to obtain each of said three dimensions in mm.

2. Method according to claim 1, wherein said count step comprises counting a number of steps of said grid along each of the six edges forming the entire contour of said parcel.

3. Method according to claim 1, wherein when the numbers of steps of said grid relating to two parallel edges are different, one of the following values is taken into account: the minimum value, the maximum value, the average value or any other value determined from said numbers of steps.

4. Device for determining the three dimensions of a parcel comprising: a trihedral reference support (14) formed of at least two mutually perpendicular vertical side panels (14A, 14B) each comprising a grid having a predetermined pitch and against which said parcel is leaned and defining with a support surface (14C) an orthonormal system of three - dimensional coordinates (O, X, Y, Z) for said parcel, an image sensor (12) for acquiring an image of said parcel leaned against the trihedral reference support, and a processing unit (16) connected to said image sensor for determining the three dimensions of said parcel from said acquired image, wherein said processing unit is configured for determining edges of said parcel, from said image, and for determining in mm each of said three dimensions of said parcel by counting a number of steps of said grid along at least three mutually perpendicular edges of said parcel forming a contour portion of said parcel.

5. Device according to claim 4, wherein said processing unit is configured for counting a number of steps of said grid along each of the six edges forming the entire contour of said parcel.

6. Device according to claim 4, wherein said support surface is formed by a plain horizontal floor panel without grid or having a grid.

7. Device according to claim 4, wherein said grid forming each of said side panels is formed by marks separated from each other by an equal and predetermined distance.

8. Device according to claim 4, wherein said grid forming each of said side panels is formed by a mesh segmenting the space into elements of identical and predetermined shape and size.

9. Device according to claim 4, wherein said image sensor is a webcam provided with a wide-angle lens and an autofocus.

10. Postage metering system having a parcel size determining device according to any one of claims 4 to 9.
